# EUROPEAN PATENT SPECIFICATION

(11) **EP 4 203 436 B1**
(45) Date of publication and mention of the grant of the patent: **29.01.2025**
(21) Application number: 20950874.6
(22) Date of filing: 31.08.2020
(51) Int. Cl.: H04L 65/40, H04L 67/289

(54) **COMMUNICATION METHOD AND MULTI-ACCESS EDGE COMPUTING SERVER**
KOMMUNIKATIONSVERFAHREN UND EDGE-COMPUTING-SERVER MIT MEHRFACHZUGRIFF
PROCÉDÉ DE COMMUNICATION ET SERVEUR INFORMATIQUE DE BORD À ACCÈS MULTIPLE

(43) Date of publication of application: 28.06.2023
(73) Proprietor: Shenzhen Yinwang Intelligent Technologies Co., Ltd., Shenzhen, Guangdong 518129 (CN)
(72) Inventor: ZENG, Zhenhua, Shenzhen, Guangdong 518129 (CN); ZHANG, Youliang, Shenzhen, Guangdong 518129 (CN); WANG, Jiawei, Shenzhen, Guangdong 518129 (CN); QIAO, Bing, Shenzhen, Guangdong 518129 (CN)
(74) Representative: Pfenning, Meinig & Partner mbB
(86) International application number: PCT/CN2020/112508
(87) International publication number: WO 2022/041205

(56) References cited:
- EP-A1- 3 657 762
- CN-A- 111 225 016
- CN-A- 111 225 074
- CN-A- 111 556 105
- US-A1- 2020 259 922
- US-A1- 2020 275 313
- SLAMNIK-KRIJESTORAC NINA ET AL: "Network Service and Resource Orchestration: A Feature and Performance Analysis within the MEC-Enhanced Vehicular Network Context", SENSORS, vol. 20, no. 14, 10 July 2020 (2020-07-10), pages 3852, XP093085134, DOI: 10.3390/s20143852

## Description

### TECHNICAL FIELD

Embodiments of this application relate to the field of communication technologies, and in particular, to a communication method and a multi-access edge computing (multi-access edge computing, MEC) server.

### BACKGROUND

With the development of the automobile industry, network connection, intelligence, and the like of automobiles are generally achieved. In an implementation, an automobile may connect to and communicate with a cloud server. For example, the cloud server maintains an application instance of the automobile. In a scenario in which the automobile requires an application service, the automobile may obtain a corresponding application instance from the cloud server.

With an increasing quantity of automobile brands and models, personalized application services of automobiles are also increasing. However, the cloud server usually maintains application instances common to various types of automobiles, for example, an upgrade package of an in-vehicle system. Consequently, some application services of automobiles cannot be implemented based on the Internet of Vehicles. It can be learned that an existing network architecture cannot meet the requirement for development of the automotive industry.
EP 3 657 762 A1 discloses that a network service method includes: a core cloud server returns all running service identification information; a multi-access edge computing cloud server receives a service request from a terminal device; and the multi-access edge computing cloud server determines whether an application that corresponds to the service request exists in the multi-access edge computing cloud server, according to the service identification information reported by the core cloud server; after the multi-access edge computing cloud server integrates the current state with the application being run by the multi-access edge computing cloud server, the terminal device is directed to the multi-access edge computing cloud server, and the multi-access edge computing cloud server provides the application to the terminal device.

### SUMMARY

The invention is defined by the independent claims. Preferable embodiments are defined by the dependent claims.
Embodiments of this application provide a communication method and a multi-access edge computing server, to resolve a problem that an existing network architecture cannot meet a development requirement of the automotive industry.

A network architecture in embodiments of this application is a network architecture based on multi-access edge computing (multi-access edge computing, MEC) (referred to as a MEC network architecture for short below). In the MEC network architecture, a cloud computing capability is deployed on a MEC server, and the MEC server is located on a network edge. The MEC server prestores an application instance corresponding to a terminal device.

According to a first aspect, an embodiment of this application provides a communication method wherein a multi-access edge computing MEC server communicates with a terminal device via a radio access network device wherein the MEC server is a second MEC server. The communication method includes: Environment information of the second MEC server is detectable by a MEC system server, and the environment information is used to enable the MEC system server to determine whether a load of the radio access network device connected to the second MEC server is greater than a first threshold. If the load of the radio access network device connected to the second MEC server is greater than a first threshold, the second MEC server receives at least one application instance selected by the MEC system server, wherein the at least one application instance has an access frequency is greater than a third threshold. The second multi-access edge computing MEC server receives a service request from a terminal device, where the service request corresponds to a first application instance; the second MEC server searches for the first application instance from prestored application instances; and if the first application instance is found, the second MEC server invokes the first application instance to provide an application service for the terminal device.

The MEC server can access a network. Further, customer-premises equipment can network with the MEC server and share the network of the MEC server. When the terminal device enters a network range of the MEC server, the terminal device can detect a network access point provided by the customer-premises equipment. Then, the terminal device establishes a network connection to the MEC server based on the customer-premises equipment. Further, the terminal device may send the service request to the MEC server. The MEC server searches for the application instance based on the service request, and further invokes the corresponding application instance to provide the service for the terminal device. According to this implementation, the application instance and the like are deployed on a network edge, so that a transmission path of data such as the application instance can be shortened, to reduce a transmission delay and improve communication performance.

The method further includes: If the first application instance is not found, the second MEC server sends an obtaining request to a MEC system server, where the MEC system server is configured to manage at least two MEC servers, and the second MEC server belongs to the at least two MEC servers; and the second MEC server receives the first application instance from the MEC system server. In actual implementation, types and a quantity of application instances deployed in the second MEC server may be determined based on an environment in which the second MEC server is located. Based on this, types and quantities of application instances deployed in different MEC servers may be different. Further, if the second MEC server does not include the first application instance, the second MEC server may request the MEC system server to obtain the first application instance from another MEC server. It can be learned that, according to this implementation, the MEC network architecture can provide an open application instance development platform for a developer, so that different MEC servers can carry differentiated application instances. This not only has good flexibility and scalability, but also can provide diversified applications and services for the terminal device, thereby improving user experience. The first application is an application instance provided to the MEC system by the second MEC server.

In a possible implementation, before the MEC server receives the service request from the terminal device, the method further includes: The MEC server receives the application instance. In this embodiment of this application, the MEC server may receive an application instance deployed by a related technician, or may receive an application instance sent by the MEC system server, to provide the application service for the terminal device.

In a possible implementation, the terminal device includes an Internet of Vehicles device.

In a possible implementation, the application instance includes an automobile diagnosis application, an intelligent cockpit upgrade application, a head unit health check application, a local featured application, and a software feature pack purchase application.

According to a second aspect, an embodiment of this application provides a communication method. The communication method includes: A multi-access edge computing MEC system server detects environment information of the second MEC server and determining whether a load of a radio access network device connected to the second MEC server is greater than a first threshold. If the load of the radio access network device connected to the second MEC server is greater than a first threshold, the MEC system server sends at least one application instance to the second MEC server, wherein the at least one application instance has an access frequency is greater than a third threshold. The MEC system server establishes a connection to a second MEC server; and the MEC system server sends an application instance to the second MEC server.

In some embodiments, a MEC network architecture further includes the MEC system server. The MEC system server may form one MEC system with at least two MEC servers by using a virtual network. The MEC system server has a function of managing the at least two MEC servers. For example, the MEC system server sends the application instance to the second MEC server. In this way, the second MEC server can provide an application service for a terminal device. It can be learned that, according to this implementation, a plurality of MEC servers may be managed by the MEC system server, and the MEC system server can synchronize an application instance maintained in each of the plurality of MEC servers. In this way, a time for deploying the application instances can be reduced, and maintenance is convenient.

In a possible implementation, that the MEC system server sends an application instance to the second MEC server includes: The MEC system server sends an application instance prestored in the MEC system server to the second MEC server. In some embodiments, the MEC system server can separately store all or some of the prestored application instances into the at least two MEC servers.

In a possible implementation, that the MEC system server sends an application instance to the second MEC server includes: The MEC system server obtains all or some of application instances of a first MEC server from the first MEC server, where the first MEC server is a MEC server already connected to the MEC system server; and the MEC system server sends the obtained application instances to the second MEC server. In some other embodiments, the MEC system server can replicate a deployed application instance in the first MEC server, and then send the replicated application instance to the second MEC server. In this way, the MEC system server can synchronize an application instance maintained in each of the plurality of MEC servers.

The MEC system server sends the application instance to the second MEC server, the method further includes: The MEC system server receives an obtaining request from the second MEC server, where the obtaining request indicates a first application instance; the MEC system server obtains the first application instance from the first MEC server in response to the obtaining request; and the MEC system server sends the first application instance to the second MEC server. In actual implementation, when a quantity of application instances in the second MEC server is less than a quantity of application instances in the first MEC server, if the second MEC server does not include a particular application instance, the second MEC server may request the MEC system server to obtain the corresponding application instance from the first MEC server. In this way, diversified applications and services can be flexibly provided for the terminal device, to improve user experience.

According to a third aspect, an embodiment of this application further provides a second MEC server. The MEC server includes: a MEC platform, configured to: Environment information of the second MEC server is detectable by a MEC system server, and the environment information is used to enable the MEC system server to determine whether a load of the radio access network device connected to the second MEC server is greater than a first threshold; if the load of the radio access network device connected to the second MEC server is greater than a first threshold, receive at least one application instance selected by the MEC system server, wherein the at least one application instance has an access frequency is greater than a third threshold; receive a service request from a terminal device, where the service request corresponds to a first application instance; search for the first application instance from prestored application instances; and if the first application instance is found, invoke the first application instance to provide an application service for the terminal device; and a MEC application, configured to generate the application instance on the second MEC server on which the MEC application is deployed in a form of a virtual machine or a container.

The MEC platform is further configured to: if the first application instance is not found, send an obtaining request to a MEC system server, where the MEC system server is configured to manage at least two MEC servers, and the second MEC server belongs to the at least two MEC servers; and receive the first application instance from the MEC system server. The first application is an application instance provided to the MEC system by the second MEC server, and the second MEC server is the MEC server among the at least two MEC servers.

In a possible implementation, the MEC platform is further configured to receive the application instance.

Technical effects generated by the third aspect and the implementations of the third aspect are the same as the technical effects generated by the first aspect and the implementations of the first aspect, and details are not described herein again.

According to a fourth aspect, an embodiment of this application further provides a MEC server, including a processor, a memory, and a bus. The processor is connected to the memory by using the bus, the memory is configured to store a set of program code, and the processor is configured to invoke the program code stored in the memory, to perform the method in the first aspect and any possible design of the first aspect.

According to a fifth aspect, an embodiment of this application provides a MEC system server, including a processor, a memory, and a bus. The processor is connected to the memory by using the bus, the memory is configured to store a set of program code, and the processor is configured to invoke the program code stored in the memory, to perform the method in the second aspect and any possible design of the second aspect.

According to a sixth aspect, an embodiment of this application provides a computer-readable storage medium. The computer-readable storage medium stores instructions. When the instructions are run on a computer, the method in the first aspect, the second aspect, any possible design of the first aspect, or any possible design of the second aspect is implemented.

According to a seventh aspect, an embodiment of this application provides a computer program product including instructions. When the instructions are run on a computer or a processor, the computer or the processor is enabled to perform the method in the first aspect, the second aspect, any possible design of the first aspect, or any possible design of the second aspect.

### BRIEF DESCRIPTION OF DRAWINGS

To describe technical solutions in embodiments of this application clearly, the following briefly describes accompanying drawings used for describing the embodiments. It is clear that persons of ordinary skill in the art may still derive other drawings from these accompanying drawings without creative efforts.
FIG. 1A is a diagram of an example system architecture of a network architecture 10 according to an embodiment of this application;
FIG. 1B is a diagram of an example system architecture of a network architecture 20 according to an embodiment of this application;
FIG. 1C is a diagram of an example system architecture of a network architecture 30 according to an embodiment of this application;
FIG. 2A is a schematic diagram of an example architecture of a MEC system 100 according to an embodiment of this application;
FIG. 2B is a schematic diagram of an example architecture of a MEC system 200 according to an embodiment of this application;
FIG. 3 is an example method flowchart of a communication method 100 according to an embodiment of this application;
FIG. 4 is a diagram of example signaling interaction of a communication method 200 according to an embodiment of this application;
FIG. 5A is a schematic diagram of example composition of a MEC server 51 according to an embodiment of this application;
FIG. 5B is a schematic diagram of example composition of a MEC server 52 according to an embodiment of this application; and
FIG. 6 is a schematic diagram of example composition of a MEC system server 60 according to an embodiment of this application.

### DESCRIPTION OF EMBODIMENTS

The following clearly describes technical solutions in embodiments of this application with reference to the accompanying drawings in embodiments of this application.

Terms used in the following embodiments of this application are merely intended to describe particular embodiments, but are not intended to limit embodiments of this application. Terms "one", "a", "the", "the foregoing", "this", and "the one" of singular forms used in this specification and the appended claims of embodiments of this application are also intended to include plural forms, unless otherwise specified in the context clearly. It should also be understood that, although the terms "first", "second", and the like may be used to describe a particular class of objects in the following embodiments, the objects should not be limited to these terms. These terms are used only to distinguish between specific objects of this class. For example, the following embodiments may use the terms "first", "second", and the like, to describe a multi-access edge computing (multi-access edge computing, MEC) server, but the MEC server should not be limited to these terms. These terms are used only to distinguish between different MEC servers. Other classes of objects that may be described by using the terms "first", "second", and the like in the following embodiments are similar, and details are not described herein again.

In addition, network architectures and service scenarios described in embodiments of this application are intended to describe the technical solutions in embodiments of this application more clearly, and do not constitute a limitation on the technical solutions provided in embodiments of this application. Persons of ordinary skill in the art may learn that with evolution of the network architectures and emergence of new service scenarios, the technical solutions provided in embodiments of this application are also applicable to similar technical problems.

The following describes a network architecture, a MEC system for such a network architecture, and embodiments for using such a network architecture.

The network architecture in embodiments of this application is a MEC-based network architecture. MEC is a technical standard proposed by the European telecommunications standards institute (European telecommunications standards institute, ETSI). In MEC, a cloud computing capability is deployed on a network edge, so that the network edge provides service resources such as computing, storage, and network resources for the terminal device.

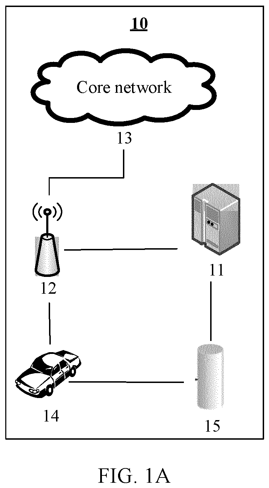

FIG. 1A shows a network architecture 10. The network architecture 10 includes a MEC system 11, a radio access network (radio access network, RAN) device 12, a core network device 13, a terminal device 14, and customer-premises equipment (customer-premises equipment, CPE) 15.

The MEC system 11 in this embodiment of this application may also be referred to as a MEC host or a MEC server. The MEC system is deployed on a general-purpose hardware server to maintain application instances and provide application services for the terminal device. The MEC system may be deployed on an edge side of the radio access network device 12. Using the Internet of Vehicles field as an example, the MEC system may be, for example, deployed in places such as an automobile 4S shop, a gas station, a charging pile, a parking lot, and a highway service station. Application instances may include, for example, automobile diagnosis, intelligent cockpit upgrade, in-vehicle health check, system optimization, software feature pack purchase, and customization of personalized automobile functions. The MEC system 11 can communicate with the terminal device based on network services provided by the radio access network device 12 and the core network device 13, so that the terminal device can connect to the nearest MEC system and access an application instance maintained by the MEC system, so as to implement a corresponding application service. For a detailed architecture of the MEC system, refer to the description of the following embodiment.

The radio access network device 12 in this embodiment of this application may also be referred to as a base station. The access network device is an apparatus deployed in a radio access network to provide a wireless communication function for the terminal device and the MEC system, and includes but is not limited to: macro base stations in various forms, a micro base station (also referred to as a small cell), a 5th-generation (5th-Generation, 5G) RAN, a relay station, a transmission reception point (transmission reception point, TRP), an evolved NodeB (evolved NodeB, eNB), a home base station (for example, a home evolved NodeB, or a home NodeB, HNB), and a baseband unit (baseband unit, BBU) for processing communication data. In a system using different radio access technologies, names of radio access network devices having similar wireless communication functions may be different. For ease of description, in all embodiments of this application, all the foregoing apparatuses that provide a wireless communication function for the terminal device are referred to as radio access network devices.

The core network device 13 in this embodiment of this application may be a network element device with an access and mobility management function (access and mobility management function, AMF), a network element device with a session management function (session management function, SMF), a network element device with a user plane function (user plane function, UPF), a network element device with an authentication management network function, or the like. By using the UPF network element device, the core network device 13 distributes and diverts traffic of an edge network to the MEC system and allocates an internet protocol (internet protocol, IP) address, so that the customer-premises equipment 15 is connected to the MEC system by using the IP address.

The terminal device 14 in this embodiment of this application may also be referred to as user equipment (user equipment, UE), a mobile station (mobile station, MS), or the like in a wireless communication standard. The terminal device in this embodiment of this application is a device having a wireless transceiver function, and can access an application instance of the MEC system by using a wireless network access point provided by the customer-premises equipment 15. The terminal device in this embodiment of this application may be deployed on land, including indoor, outdoor, handheld, or in-vehicle terminal devices, or may be deployed on a water surface (for example, a ship); or may be deployed in air (for example, on an airplane, a balloon, or a satellite). The terminal device may include various types of mobile phones (mobile phone), pads (Pad), computers with a wireless transceiver function, wireless data cards, virtual reality (virtual reality, VR) terminal devices, augmented reality (augmented reality, AR) terminal devices, machine type communication (machine type communication, MTC) terminal devices, terminal devices in industrial control (industrial control), terminal devices in self-driving (self-driving), terminal devices in remote medical (remote medical), terminal devices in a smart grid (smart grid), terminal devices in transportation safety (transportation safety), terminal devices in a smart city (smart city), terminal devices in a smart homes (household devices with a wireless communication function, such as refrigerators, televisions, washing machines, or furniture), wearable devices (such as smart watches, smart bands, or pedometers), and the like. The terminal device in this application may be further set to a device having a fixed location and having a wireless communication function similar to that of the foregoing terminal device. In a system using different radio access technologies, names of terminal devices having similar wireless communication functions may be different. Only for ease of description, the foregoing apparatuses having a wireless communication function are collectively referred to as terminal devices in this embodiment of this application.

The customer-premises equipment 15 in this embodiment of this application is configured as a device that has a function of accessing a network and a function of sharing the network, and may include a router or the like. The customer-premises equipment 15 may select, by local breakout, a UPF network element device corresponding to the MEC system, and access a network corresponding to the UPF network element device. Then, the customer-premises equipment 15 provides a network access point of the UPF network element device for the terminal device in a network sharing manner. For example, the customer-premises equipment 15 may share the network of the UPF network element device by using wireless fidelity (wireless fidelity, Wi-Fi). The customer-premises equipment 15 may further obtain an IP address allocated by the UPF network element device, and then establish a connection to the MEC system by using the IP address, so that the terminal device can access an application instance of the MEC system by using the customer-premises equipment 15.

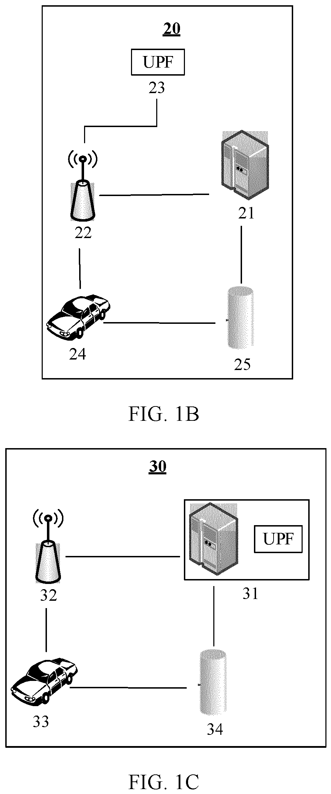

In some embodiments, in a network architecture 20 shown in FIG. 1B, the foregoing UPF network element device and the MEC system may be separately deployed. In some other embodiments, in a network architecture 30 shown in FIG. 1C, the foregoing UPF network element device may be integrated and deployed with the MEC system.

As shown in FIG. 1B, the network architecture 20 includes a MEC system 21, a radio access network device 22, a UPF network element device 23, a terminal device 24, and customer-premises equipment 25. The UPF network element device 23 is deployed in a core network (not shown in FIG. 1B), and is configured to connect to the radio access network device 22, the core network, and the MEC system 21. In addition, the UPF network element device 23 may further connect to the customer-premises equipment 25, and allocate an IP address to the customer-premises equipment 25, so that the customer-premises equipment 25 is connected to the MEC system 21 and shares a network, and further, the terminal device 24 accesses the MEC system 21 by using the network provided by the customer-premises equipment 25.

As shown in FIG. 1C, the network architecture 30 includes a MEC system 31, a radio access network device 32, a terminal device 33, and customer-premises equipment 34. The radio access network device 32 accesses a core network (not shown in FIG. 1C). The MEC system 31 is connected to the radio access network device 32. In this embodiment, the MEC system 31 includes a UPF network element device. The UPF network element device is connected to the radio access network device 32, and is configured to configure a network for the MEC system 31. The UPF network element device is further configured to configure an IP address for the customer-premises equipment 34, so that the customer-premises equipment 34 and the MEC system 31 are connected to each other and share a network, and further, the terminal device 33 accesses an application instance in the MEC system 31 by using the network provided by the customer-premises equipment 34.

It can be understood that, FIG. 1B and FIG. 1C are only for illustrative description, and do not constitute a limitation on the network architecture in this embodiment of this application. In some other embodiments, the MEC system and the UPF network element device may alternatively be deployed in a partial sharing manner. Details are not described herein.

It can be learned that, according to this implementation, the application instance and the like are deployed on a network edge, so that a transmission path of data such as the application instance is shortened, to reduce a transmission delay and improve communication performance.

Embodiments of the MEC system related to FIG. 1A to FIG. 1C are described below.

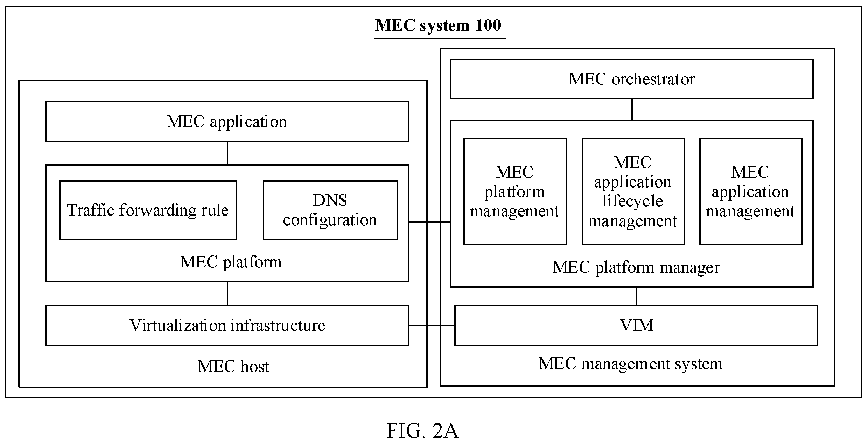

FIG. 2A shows a MEC system 100. The MEC system 100 includes a MEC server. The MEC server includes a MEC host (MEC host) and a MEC management system. The MEC host includes a MEC application, a MEC platform, a virtualization infrastructure, and the like. The MEC management system includes a MEC platform manager (MEC platform manager, MEPM), a MEC orchestrator (MEC orchestrator, MEO), a virtualization infrastructure manager (virtualization infrastructure manager, VIM), and the like.

The MEC application is a virtual machine instance running on the MEC virtualization infrastructure, and the application instance may communicate with the MEC platform. The MEC application is, for example, an Internet of Vehicles application, an Internet of Things application, or a video caching application. In actual implementation, the MEC system 100 deploys, based on network function virtualization (network function virtualization, NFV) and container technologies, an operating system or a container required by an application. The MEC application may be deployed on one or more MEC operating systems or containers.

The MEC platform receives a traffic forwarding rule from the MEC platform manager or the MEC application, and delivers an instruction to a forwarding plane based on the forwarding rule. In addition, the MEC platform further supports a configuration of a local domain name system (domain name system, DNS) proxy server to redirect data traffic to corresponding applications and services.

The virtualization infrastructure provides virtualized computing, storage, and network resources for deploying the MEC application, and may provide continuous storage and time related information for the MEC application, and includes a data forwarding plane to execute a forwarding rule for data received from the MEC platform, and routes traffic between various MEC applications, services, and networks.

The MEPM has functions such as MEC platform element management, MEC application lifecycle management, and MEC application rule and requirement management. The MEC application lifecycle management includes creating and terminating the MEC application, and providing an indication message of an application-related event for the MEO. The MEC application rule and requirement management includes authentication, a traffic rule, DNS configuration, conflict coordination, and the like.

The MEO provides a core function of the MEC. The MEO controls resources and a capacity of a MEC network on a holistic scale, including all deployed MEC hosts and services, available resources in each host, instantiated applications, network topologies, and the like. When selecting a to-be-accessed target MEC host for a user, the MEO measures a user requirement and available resources of each host, and selects a most suitable MEC host for the user. If the user needs to switch the MEC host, the MEO triggers a switching procedure. The MEO may further be configured to trigger instantiation and termination of the MEC application. The MEO and the VIM manage virtualized resources and virtual machine images of applications and jointly maintain status information of available resources.

It should be noted that, the user may deploy an application instance in the MEC system 100 based on an environment in which the MEC system 100 is located. The environment in which the MEC system 100 is located includes, for example, a traffic volume of a section in which the MEC system 100 is located or a load status of a radio access network device associated with the MEC system 100. In this way, it can be ensured that network resources occupied by the MEC system 100 are within a limit of the radio access network device while the carried application instance meets an environment requirement. Based on this, application instances carried by different MEC systems may be different.

It can be learned that, according to this implementation, the MEC system can provide an open application instance development platform for a developer, so that different MEC systems can carry differentiated application instances. The system is flexible and scalable, and can provide diversified applications and services for the terminal device, thereby improving user experience.

It can be understood that, FIG. 2A is only for illustrative description, and does not constitute a limitation on the MEC system in this embodiment of this application. In some other embodiments, the MEC system may further include more or fewer components.

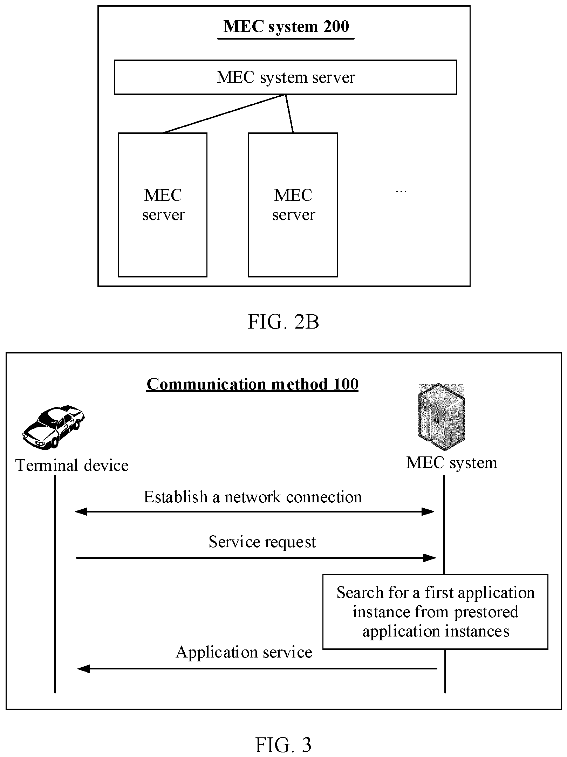

FIG. 2B shows a MEC system 200. The MEC system 200 includes a MEC system server and at least two MEC servers. Each of the at least two MEC servers is the same as that described in the embodiment shown in FIG. 2A. Details are not described herein.

The MEC system server and the at least two MEC servers may be deployed in one virtual network, and may communicate based on the virtual network. The MEC system server has a function of managing the at least two MEC servers. In some embodiments, the MEC system server can separately store all or some of prestored application instances into the at least two MEC servers. In actual implementation, the MEC system server may store all the stored application instances into the at least two MEC servers. Alternatively, the MEC system server may store all the stored application instances into a first MEC server, and store some of the application instances into a second MEC server. Alternatively, the MEC system server may store a first part of the stored application instances into the first MEC server, and store a second part of the application instances into the second MEC server. The first part of application instances may not intersect or may partially intersect the second part of application instances. This is not limited herein. In some other embodiments, the MEC system server can replicate application instances defined by a technician in the first MEC server, and then store the replicated application instances into the second MEC server. In actual implementation, the MEC system server may replicate all of the application instances in the first MEC server, or may replicate some of the application instances in the first MEC server. The first MEC server and the second MEC server belong to the at least two MEC servers.

In some embodiments, the MEC system server and the at least two MEC servers are separately deployed. In some other embodiments, a function of the MEC system server may be deployed in a MEC management system of any MEC server in the at least two MEC servers.

It should be noted that, an apparatus that provides the application instance for the terminal device is the MEC server. Based on this, although the at least two MEC servers belong to a same virtual network, in actual implementation, a distance between the at least two MEC servers may be long. Therefore, in an implementation scenario, the terminal device usually accesses an application instance in one of the at least two MEC servers.

It can be learned that, according to this implementation, a plurality of MEC servers may be managed by the MEC system server, and the MEC system server can synchronize an application instance maintained in each of the plurality of MEC servers. In this way, a time for deploying the application instances can be reduced, and maintenance is convenient.

With reference to the foregoing network architecture, FIG. 3 shows a communication method 100. A terminal device establishes a network connection to a MEC system, and further, the terminal device sends a service request to the MEC system based on the network. The service request corresponds to a first application instance. The MEC system searches for the first application instance from prestored application instances, and after finding the first application instance, the MEC system invokes the first application instance to provide an application service for the terminal device.

The foregoing MEC system is the same as that described in FIG. 2A or FIG. 2B, and details are not described herein again. In actual implementation, if the MEC system is the same as that described in the embodiment shown in FIG. 2A, the terminal device establishes a network connection to the MEC server. If the MEC system is the same as that described in the embodiment shown in FIG. 2B, the terminal device establishes a network connection to any of the at least two MEC servers. In addition, the terminal device establishes a network connection to a corresponding MEC server by using a network access point provided by customer-premises equipment. The terminal device may access a network by using a module that provides a network function in the terminal device. For example, when the terminal device is implemented as a mobile phone or an Internet of Things device, the terminal device may access the network by using a Wi-Fi module. When the terminal device is implemented as an Internet of Vehicles device such as an automobile, the terminal device may access the network by using a telematics box (telematics box, T-Box).

An "application service" in this embodiment of this application may include obtaining data, obtaining an installation package or an upgrade package, downloading and displaying information, and the like. Correspondingly, "invoking the application instance to provide an application service" in this embodiment of this application may include reading data related to the application instance, and transmitting the corresponding data to the terminal device; obtaining a latest installation package related to the application instance, and transmitting the corresponding installation package to the terminal device; invoking a function of the application instance, obtaining information about the terminal device, analyzing the corresponding information, and transmitting an analysis result to the terminal device; and the like.

It should be understood that, forms and content of the application service, the application instance, and the like in this embodiment of this application are not limited. In actual implementation, application services and application instances in different implementation scenarios are different. For example, in an Internet of Things implementation scenario, the application service may include, for example, "viewing a quantity of peripheral devices", and the application instance may be, for example, a function instance such as "performance analysis of devices in the Internet of Things". For another example, in an Internet of Vehicles implementation scenario, the application service may include, for example, "obtaining local featured information", and the application instance may include, for example, a function instance such as "vehicle diagnosis". Details are not described herein.

In this way, the MEC system maintains the application instance of the terminal device, so that the flexibility and scalability of setting the application instance can be improved. In addition, the MEC system is deployed on a network edge. Based on this, the terminal device obtains data from the MEC system, to shorten a network transmission path, thereby reducing a transmission delay and improving communication performance.

The communication method in this embodiment of this application is described below by using Internet of Vehicles implementation scenarios as examples.

The following embodiment uses an example in which the terminal device is implemented as an automobile. Application instances in the following embodiment include an automobile diagnosis application, an intelligent cockpit upgrade application, a head unit health check application, a local featured application, a software feature pack purchase application, and the like.

### Scenario 1:

In Scenario 1, the MEC system includes one MEC server. In this embodiment of this application, the MEC system in Scenario 1 is referred to as a "first MEC system".

Before the automobile communicates with the first MEC system, a related technician may deploy a network architecture of a first Internet of Vehicles. The network architecture of the first Internet of Vehicles may be the same as that described in any embodiment in FIG. 1A to FIG. 1C. The network architecture of the first Internet of Vehicles includes the first MEC system, and an application instance related to a vehicle such as the vehicle diagnosis application may be deployed in the first MEC system.

It can be understood that, the application instance related to the vehicle is only for illustrative description, and does not constitute a limitation on the application instance related to the vehicle in this embodiment of this application. In actual implementation, the first MEC system may further include more or fewer application instances.

Further, after the automobile enters a network coverage of the first MEC system, the vehicle can detect the network access point provided by the customer-premises equipment. Then, the automobile establishes a network connection to the first MEC system by using the T-Box of the automobile based on the access point. Further, the automobile may send a service request to the first MEC system based on a requirement. The service request may include, for example, keyword information of a requested service, an application name of the requested service, and the like. Then, the first MEC system may search for an application instance corresponding to the corresponding keyword information or the application name from deployed application instances, and invoke the application instance to provide the application service for the automobile.

For example, after the automobile establishes the network connection to the first MEC system, the automobile requests, for example, an intelligent cockpit upgrade from the first MEC system. Correspondingly, the automobile sends a service request to the first MEC system. The service request includes, for example, a keyword "cockpit", a keyword "upgrade", and cockpit attribute data of the automobile. After receiving the service request, the first MEC system determines the "intelligent cockpit upgrade application" based on the keyword "cockpit" and the keyword "upgrade". Further, the first MEC system may determine, based on the cockpit attribute data of the automobile and the "intelligent cockpit upgrade application", upgrade data matching the automobile, and send the upgrade data to the automobile, so that the automobile implements an intelligent cockpit upgrade service based on the upgrade data.

It can be understood that, the intelligent cockpit upgrade is only for illustrative description, and does not constitute a limitation on an interactive process between the automobile and the MEC system in this embodiment of this application. In some other embodiments, if the automobile requests another service from the first MEC system, the service request sent by the automobile may include other related information, and processing logic of the first MEC system may be different from that in the foregoing embodiment. Details are not described herein.

### Scenario 2:

In Scenario 2, the MEC system includes a MEC system server, a first MEC server, and a second MEC server. In this embodiment of this application, the MEC system in Scenario 2 is referred to as a "second MEC system".

Before the automobile communicates with the second MEC system, a related technician may deploy a network architecture of a second Internet of Vehicles. The network architecture of the second Internet of Vehicles may be the same as that described in any embodiment in FIG. 1A to FIG. 1C. The network architecture of the second Internet of Vehicles includes the second MEC system.

In a process in which the related technician deploys the second MEC system, the related technician may first deploy the MEC system server, further, deploy a virtual network based on the MEC system server, and then, deploy the first MEC server and the second MEC server based on the virtual network, so that the MEC system server, the first MEC server, and the second MEC server are in a same network.

In some embodiments, the MEC system server in the second MEC system is deployed based on a MEC system server in another MEC system. In this way, the MEC system server in the second MEC system may include an application instance in another MEC system. Further, in this embodiment, after the deployment of the first MEC server and the second MEC server is completed, the MEC system server stores included application instances into the first MEC server and the second MEC server. In some other embodiments, the related technician constructs the MEC system server, the first MEC server, and the second MEC server. In this embodiment, in a process of constructing the first MEC server, the related technician may deploy the application instance in the first MEC server. Further, after the deployment of the second MEC server is completed, the MEC system server replicates the application instance in the first MEC server, and further stores the replicated application instance into the second MEC server. The application instance in this embodiment of this application is an application instance related to a vehicle. For details, refer to the description of the application instance in Scenario 1. Details are not described herein again.

Further, after the deployment of the second MEC system is completed, if the automobile enters a network coverage of the first MEC server, the automobile can detect a network access point provided by customer-premises equipment connected to the first MEC server. Then, the automobile may access a network corresponding to the first MEC server, and further communicate with the first MEC server, to complete an application service. If the automobile enters a network coverage of the second MEC server, the automobile can detect a network access point provided by customer-premises equipment connected to the second MEC server. Then, the automobile may access a network corresponding to the second MEC server, and further communicate with the second MEC server, to complete an application service. For an implementation process in which the automobile establishes a connection to and communicates with any MEC server, refer to the description of Scenario 1. Details are not described herein.

In actual implementation, in some embodiments, application instances maintained in the first MEC server are the same as application instances maintained in the second MEC server. In some other embodiments, the application instances maintained in the second MEC server are some of the application instances maintained in the first MEC server.

For example, before deploying the application instance in the second MEC server, the MEC system server may detect environment information of the second MEC server. If load of a radio access network device connected to the second MEC server is greater than a first threshold, or a traffic volume of a section in which the second MEC server is located is less than a second threshold, the MEC system server may select, from all application instances prestored in the MEC system server or in the first MEC server, an application instance whose access frequency is greater than a third threshold, and store the application instance into the second MEC server. For example, the application instances maintained in the first MEC server include an automobile diagnosis application, an intelligent cockpit upgrade application, a head unit health check application, a local featured application, and a software feature pack purchase application. Access frequencies of the automobile diagnosis application, the head unit health check application, and the local featured application are greater than the third threshold, and access frequencies of the intelligent cockpit upgrade application and the software feature pack purchase application are both less than the third threshold. The MEC system server may store only the automobile diagnosis application, the head unit health check application, and the local featured application into the second MEC server, but does not store the intelligent cockpit upgrade application and the software feature pack purchase application into the second MEC server.

The first threshold, the second threshold, and the third threshold may be values determined based on empirical data. For example, the third threshold may be set to 0.9. Details are not described herein.

According to this implementation, in a process of deploying the MEC system, not only flexibility is good, but also an environment condition and actual application can be well balanced, so that user experience is optimal.

Based on this, after the second MEC server receives a request for a service corresponding to a second application instance for the first time, the second MEC server searches for the second application instance. If the second application instance is not found, the second MEC server may request the second application instance from the MEC system server. The MEC system server may respond to the request of the second MEC server, replicate the second application instance from the first MEC server, and add the second application instance to the second MEC server. Further, after receiving the request for the service corresponding to the second application instance, the second MEC server may provide the service corresponding to the second application instance for the automobile.

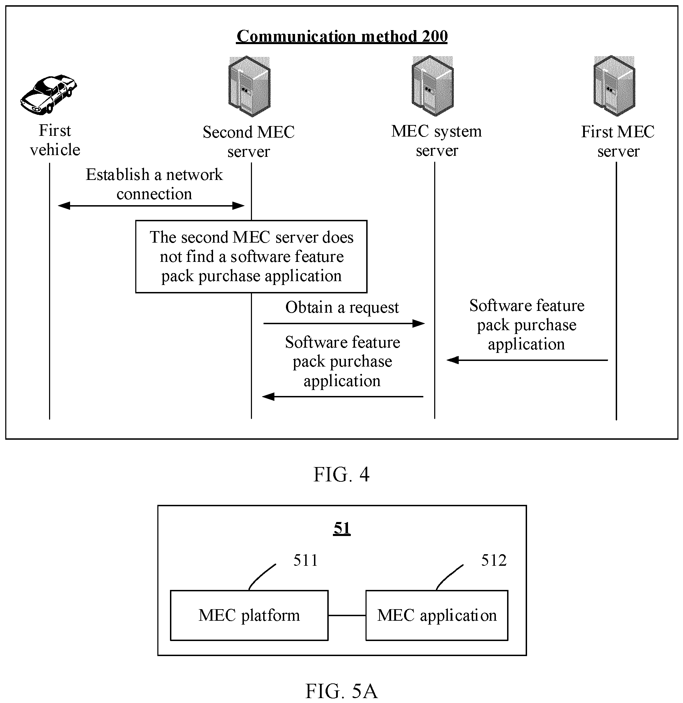

In a communication method 200 shown in FIG. 4, a first automobile establishes a network connection to the second MEC server in the second MEC system. Further, the first automobile sends a service request to the second MEC server based on the network, where the service request corresponds to the software feature pack purchase application. In this embodiment, for example, the second MEC server does not deploy the software feature pack purchase application, and further, the second MEC server sends an obtaining request to the MEC system server, to obtain the software feature pack purchase application. The MEC system server responds to the obtaining request, replicates the software feature pack purchase application from the first MEC server, and then adds the software feature pack purchase application to the second MEC server. Further, after receiving the service request corresponding to the software feature pack purchase application from a second automobile, the second MEC server may invoke the software feature pack purchase application to provide a purchase service for the second automobile.

It can be understood that, the application instance in Scenario 2 is only for illustrative description, and does not constitute a limitation on the application instance in this embodiment of this application. In actual implementation, a quantity and types of application instances may be larger or smaller. This is not limited herein.

In addition, Scenario 1 and Scenario 2 are only for illustrative description by using the Internet of Vehicles implementation scenarios as examples, and constitute no limitation on this embodiment of this application. The technical solution in this embodiment of this application may be further applied to another implementation scenario. In some other embodiments, if the technical solution in this embodiment of this application is applied to another implementation scenario, application instances, service requests, and the like are all different from the description in the foregoing embodiment. This is not limited herein.

In conclusion, according to the implementation of this embodiment of this application, the MEC system is deployed in the network architecture, the application instance is deployed in the MEC system, and the MEC system is located on the network edge. In this way, the application instance and the like are deployed on the network edge, so that a transmission path of data such as the application instance can be shortened, to reduce a transmission delay and improve communication performance. In addition, the MEC system can provide an open application instance development platform for a developer, so that different MEC systems can carry differentiated application instances. This not only has good flexibility and scalability, but also can provide diversified applications and services for the terminal device, thereby improving user experience.

In the foregoing embodiments, solutions of the communication method provided in this embodiment of this application are described from the perspectives of hardware physical structures of the MEC server, the MEC system server, and the like, software architectures, and actions performed by software and hardware. Persons skilled in the art should be easily aware that, with reference to the service request and the processing steps of searching for an application instance described in embodiments disclosed in this specification, embodiments of this application can be implemented not only in a form of hardware or a combination of hardware and computer software. Whether a function is performed by hardware or hardware driven by computer software depends on a particular application and a design constraint of the technical solutions. Persons skilled in the art may use different methods to implement the described functions for each particular application, but it should not be considered that the implementation goes beyond the scope of embodiments of this application.

For example, as shown in FIG. 5A, corresponding to the method 100 and the method 200, the MEC server in this embodiment of this application may be further implemented as a MEC server 51. The MEC server 51 may include a MEC platform 511 and a MEC application 512. The MEC application 512 may be configured to generate an application instance on the MEC server 51 on which MEC application 512 is deployed in a form of a virtual machine or a container. The MEC platform 511 may be configured to receive a service request from the terminal device, where the service request corresponds to the first application instance. The MEC platform 511 may be further configured to search for the first application instance from prestored application instances. The MEC platform 511 may be further configured to: if the first application instance is found, invoke the first application instance to provide an application service for the terminal device.

It can be learned that, the MEC server 51 provided in this embodiment of this application can maintain an application instance and the like on the network edge, so that a transmission path between data such as the application instance and the terminal device can be shortened, to reduce a transmission delay and improve communication performance.

Optionally, the MEC platform 511 is further configured to: when the first application instance is not found, send an obtaining request to the MEC system server, where the MEC system server is configured to manage at least two MEC servers, and the MEC server belongs to the at least two MEC servers; and receive the first application instance from the MEC system server.

Optionally, the MEC platform 511 is further configured to receive the application instance.

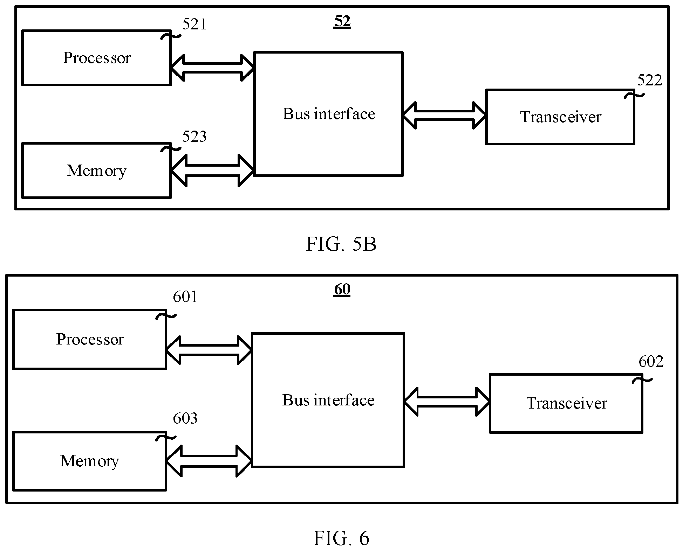

It should be understood that, the division in FIG. 5A is merely division of logical functions, and may be entirely or partially integrated into one physical entity in actual implementation, or may be physically separated. In this embodiment of this application, a function of the MEC platform 511 may be integrated into a processor for implementation, and a function of the MEC application 512 may be integrated into a memory for implementation. As shown in FIG. 5B, the MEC server 52 may include a processor 521, a transceiver 522, and a memory 523.

It should be understood that, the MEC server 52 in this embodiment of this application may correspond to the MEC server in the method shown in FIG. 3 and FIG. 4. The transceiver 522 is configured to perform information sending and receiving performed by the MEC server in FIG. 3 and FIG. 4. The memory 523 may be configured to store code and application instances. The processor 521 is configured to execute the code stored in the memory 513, to implement other processing except information receiving and sending of the MEC server in FIG. 3 and FIG. 4. Details are not described herein again. Alternatively, in another implementation, the processor 521 integrates a function of the transceiver 522, and the MEC server 52 may include the processor 521 and the memory 523. The processor 521 is configured to execute the code stored in the memory 523, to implement a function of the MEC server in FIG. 3 and FIG. 4.

For specific content, refer to the description of the related part in FIG. 3 and FIG. 4. Details are not described herein again.

As shown in FIG. 6, an embodiment of this application further provides a MEC system server 60. The MEC system server 60 may include a processor 601, a transceiver 602, and a memory 603.

It should be understood that, the MEC system server 60 in this embodiment of this application may correspond to the MEC system server in the method shown in FIG. 4. The transceiver 602 is configured to perform information receiving and sending performed by the MEC system server in FIG. 4. The memory 603 may be configured to store code. The processor 601 is configured to execute the code stored in the memory 603, to implement other processing except information receiving and sending of the MEC system server in FIG. 4. Details are not described herein again. Alternatively, in another implementation, the processor 601 integrates a function of the transceiver 602, and the memory 603 may further store application instances. The MEC system server 60 may include the processor 601 and the memory 603. The processor 601 is configured to execute the code stored in the memory 603, to implement a function of the MEC system server in FIG. 4.

For specific content, refer to the description of the related part in FIG. 4. Details are not described herein again.

In specific implementation, corresponding to the MEC server and the MEC system server, an embodiment of this application further separately provides a computer storage medium. The computer storage medium disposed in any device may store a program. When the program is executed, some or all of the steps in various embodiments including communication methods provided by the method 100 and the method 200 may be implemented. A storage medium in any device may be a magnetic disk, an optical disc, a read-only memory (read-only memory, ROM), a random access memory (random access memory, RAM), or the like.

In this embodiment of this application, the transceiver may be a wired transceiver, a wireless transceiver, or a combination thereof. The wired transceiver may be, for example, an Ethernet interface. The Ethernet interface may be an optical interface, an electrical interface, or a combination thereof. The wireless transceiver may be, for example, a wireless local area network transceiver, a cellular network transceiver, or a combination thereof. The processor may be a central processing unit (central processing unit, CPU), a network processor (network processor, NP), or a combination of a CPU and an NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof. The memory may include a volatile memory (volatile memory), for example, a random-access memory (random-access memory, RAM). The memory may also include a non-volatile memory (non-volatile memory), for example, a read-only memory (read-only memory, ROM), a flash memory (flash memory), a hard disk drive (hard disk drive, HDD), or a solid-state drive (solid-state drive, SSD). The memory may further include a combination of the foregoing types of memories.

FIG. 5B and FIG. 6 may further include a bus interface. The bus interface may include any quantity of interconnected buses and bridges, and specifically, various circuits of one or more processors represented by the processor and a memory represented by the memory are linked together. The bus interface may further link various other circuits such as a peripheral device, a voltage stabilizer, and a power management circuit together. This is all well known in the art, and therefore is not further described herein. The bus interface provides an interface. The transceiver provides a unit for communicating with various other devices over a transmission medium. The processor is responsible for managing a bus architecture and general processing, and the memory may store data used by the processor in performing an operation.

Persons skilled in the art may further understand that various illustrative logical blocks (illustrative logic blocks) and steps (steps) that are listed in embodiments of this application may be implemented by using electronic hardware, computer software, or a combination thereof. Whether the functions are implemented by using hardware or software depends on a particular application and a design requirement of an entire system. Persons skilled in the art may use various methods to implement the described functions for each particular application, but it should not be considered that the implementation goes beyond the scope of embodiments of this application.

The various illustrative logical units and circuits described in embodiments of this application may implement or operate the described functions by using a general-purpose processor, a digital signal processor, an application-specific integrated circuit (ASIC), a field-programmable gate array (FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors in combination with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an EPROM, an EEPROM, a register, a hard disk drive, a removable magnetic disk, a CD-ROM, or a storage medium of any other form in the art. For example, the storage medium may connect to a processor, so that the processor can read information from the storage medium and write information into the storage medium. Optionally, the storage medium may alternatively be integrated into the processor. The processor and the storage medium may be deployed in an ASIC, and the ASIC may be deployed in an electronic device. Alternatively, the processor and the storage medium may be deployed in different components of the electronic device.

It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or functions in this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or message center to another website, computer, server, or message center in a wired (for example, a coaxial cable, an optical fiber, or a digital subscriber line (DSL)) or wireless (for example, infrared, radio, or microwave) manner. The computer-readable storage medium may be any usable medium accessible by a computer, or a message storage device, such as a server or a message center, integrating one or more usable media. The usable medium may be a magnetic medium (for example, a floppy disk, a hard disk drive, or a magnetic tape), an optical medium (for example, a DVD), a semiconductor medium (for example, a solid state drive (solid-state drive, SSD)), or the like.

All parts in this specification are described in a progressive manner, and for same or similar parts in the embodiments, reference may be made to each other. Each embodiment focuses on a difference from other embodiments. Especially, the apparatus and system embodiments are basically similar to the method embodiment, and therefore are described briefly. For related parts, refer to partial descriptions in the method embodiment.

Although embodiments of this application are described, persons skilled in the art can make variations and modifications to these embodiments once they learn the basic inventive concept. Therefore, the following claims are intended to be construed as to cover the preferred embodiments and all variations and modifications falling within the scope of this application.

It is clear that persons skilled in the art can make modifications and variations to this application without departing from the scope of this application. This application is intended to cover these modifications and variations provided that they fall within the scope defined by the claims of this application and their equivalent technologies.

## Claims

1. A communication method, wherein a multi access edge computing, MEC, server communicates with a terminal device (14, 24, 33) via a radio access network device (12, 22, 32), wherein the MEC server is a second MEC server and the communication method comprises:
environment information of the second MEC server is detected by a MEC system server, and the environment information is used to enable the MEC system server to determine whether a load of the radio access network device (12, 22, 32) connected to the second MEC server is greater than a first threshold;
if the load of the radio access network device (12, 22, 32) connected to the second MEC server is greater than a first threshold, the second MEC server receives at least one application instance selected by the MEC system server, wherein the at least one application instance has an access frequency is greater than a third threshold;
receiving, by the second multi-access edge computing MEC server, a service request from a terminal device (14, 24, 33), wherein the service request corresponds to a first application instance;
searching, by the second MEC server, for the first application instance from prestored application instances; and
if the first application instance is found, invoking, by the second MEC server, the first application instance to provide an application service for the terminal device (14, 24, 33);
if the first application instance is not found, sending, by the second MEC server, an obtaining request to a MEC system server, wherein the MEC system server is configured to manage at least two MEC servers, and the second MEC server belongs to the at least two MEC servers; and
receiving, by the second MEC server, the first application instance from the MEC system server;
wherein the first application is an application instance provided to the MEC system by the second MEC server.

2. The method according to claim 1, wherein the terminal device (14, 24, 33) comprises an Internet of Vehicles device.

3. The method according to any one of claims 1 or 2, wherein the application instance comprises an automobile diagnosis application, an intelligent cockpit upgrade application, a head unit health check application, a local featured application, and a software feature pack purchase application.

4. A communication method, wherein the communication method comprises:
establishing, by a multi-access edge computing MEC system server, a connection to a second MEC server;
detecting environment information of the second MEC server and determining whether a load of a radio access network device (12, 22, 32) connected to the second MEC server is greater than a first threshold;
if the load of the radio access network device (12, 22, 32) connected to the second MEC server is greater than a first threshold, the MEC system server sends at least one application instance to the second MEC server, wherein the at least one application instance has an access frequency is greater than a third threshold;
receiving, by the MEC system server, an obtaining request from the second MEC server, wherein the obtaining request indicates a first application instance;
obtaining, by the MEC system server, the first application instance from the first MEC server in response to the obtaining request; and
sending, by the MEC system server, the first application instance to the second MEC server.

5. A multi-access edge computing MEC server, comprising:
a processor, a memory, and a bus, wherein the processor is connected to the memory by using the bus, the memory is configured to store a set of program code, and the processor is configured to invoke the program code stored in the memory, to execute the step according to any one of claims 1 to 3.

6. A multi-access edge computing MEC system server, comprising:
a processor, a memory, and a bus, wherein the processor is connected to the memory by using the bus, the memory is configured to store a set of program code, and the processor is configured to invoke the program code stored in the memory, to execute the step according to claim 4.

7. A computer-readable storage medium, wherein the computer-readable storage medium stores instructions, and when the instructions are run on a computer, the method according to any one of claims 1 to 4 is implemented.

8. A computer program product including instructions, wherein when the instructions are run on a computer or a processor, the computer or the processor is enabled to perform the method according to any one of claims 1 to 4.

## Patentansprüche

1. Kommunikationsverfahren, wobei ein Edge-Computing-Server (MEC-Server) mit Mehrfachzugiff über eine Funkzugangsnetzwerkvorrichtung (12, 22, 32) mit einer Endgerätevorrichtung (14, 24, 33) kommuniziert, wobei der MEC-Server ein zweiter MEC-Server ist und das Kommunikationsverfahren Folgendes umfasst:
Erkennen von Umgebungsinformationen des zweiten MEC-Servers durch einen MEC-Systemserver, und die Umgebungsinformationen werden verwendet, um es dem MEC-Systemserver zu ermöglichen, zu bestimmen, ob eine Last der mit dem zweiten MEC-Server verbundenen Funkzugangsnetzwerkvorrichtung (12, 22, 32) größer als ein erster Schwellenwert ist;
wenn die Last der mit dem zweiten MEC-Server verbundenen Funkzugangsnetzwerkvorrichtung (12, 22, 32) größer als ein erster Schwellenwert ist, empfängt der zweite MEC-Server mindestens eine von dem MEC-Systemserver ausgewählte Anwendungsinstanz, wobei die mindestens eine Anwendungsinstanz eine Zugriffshäufigkeit aufweist, die größer als ein dritter Schwellenwert ist;
Empfangen einer Dienstanforderung von einer Endgerätevorrichtung (14, 24, 33) durch den zweiten Edge-Computing-MEC-Server mit Mehrfachzugriff, wobei die Dienstanforderung einer ersten Anwendungsinstanz entspricht;
Suchen nach der ersten Anwendungsinstanz durch den zweiten MEC-Server unter vorgespeicherten Anwendungsinstanzen; und
wenn die erste Anwendungsinstanz gefunden wird, Aufrufen der ersten Anwendungsinstanz durch den zweiten MEC-Server, um einen Anwendungsdienst für die Endgerätevorrichtung (14, 24, 33) bereitzustellen;
wenn die erste Anwendungsinstanz nicht gefunden wird, Senden einer Beschaffungsanforderung durch den zweiten MEC-Server an einen MEC-Systemserver, wobei der MEC-Systemserver zum Verwalten von mindestens zwei MEC-Servern konfiguriert ist und der zweite MEC-Server zu den mindestens zwei MEC-Servern gehört; und
Empfangen der ersten Anwendungsinstanz von dem MEC-Systemserver durch den zweiten MEC-Server;
wobei die erste Anwendung eine Anwendungsinstanz ist, die dem MEC-System von dem zweiten MEC-Server bereitgestellt wird.

2. Verfahren nach Anspruch 1, wobei die Endgerätevorrichtung (14, 24, 33) eine Internet der Fahrzeuge-Vorrichtung umfasst.

3. Verfahren nach einem der Ansprüche 1 oder 2, wobei die Anwendungsinstanz eine Anwendung zur Automobildiagnose, eine Anwendung zur intelligenten Cockpit-Aufrüstung, eine Anwendung zur Überprüfung des Zustands einer Haupteinheit, eine Anwendung mit lokalen Features und eine Anwendung zum Kauf eines Software-Feature-Pakets umfasst.

4. Kommunikationsverfahren, wobei das Kommunikationsverfahren Folgendes umfasst:
Herstellen einer Verbindung zu einem zweiten MEC-Server durch einen Edge-Computing-MEC-Systemserver mit Mehrfachzugriff;
Erfassen von Umgebungsinformationen des zweiten MEC-Servers und Bestimmen, ob eine Last einer mit dem zweiten MEC-Server verbundenen Funkzugangsnetzwerkvorrichtung (12, 22, 32) größer als ein erster Schwellenwert ist;
wenn die Last der mit dem zweiten MEC-Server verbundenen Funkzugangsnetzwerkvorrichtung (12, 22, 32) größer als ein erster Schwellenwert ist, sendet der MEC-Systemserver mindestens eine Anwendungsinstanz an den zweiten MEC-Server, wobei die mindestens eine Anwendungsinstanz eine Zugriffshäufigkeit aufweist, die größer als ein dritter Schwellenwert ist;
Empfangen einer Beschaffungsanforderung durch den MEC-Systemserver von dem zweiten MEC-Server, wobei die Beschaffungsanforderung eine erste Anwendungsinstanz angibt;
Abrufen der ersten Anwendungsinstanz von dem ersten MEC-Server durch den MEC-Systemserver als Antwort auf die Beschaffungsanforderung; und
Senden der ersten Anwendungsinstanz durch den MEC-Systemserver an den zweiten MEC-Server.

5. Edge-Computing-MEC-Systemserver mit Mehrfachzugriff, umfassend:
einen Prozessor, einen Speicher und einen Bus, wobei der Prozessor über den Bus mit dem Speicher verbunden ist, der Speicher zum Speichern eines Programmcodesatzes konfiguriert ist und der Prozessor zum Aufrufen des im Speicher gespeicherten Programmcodes konfiguriert ist, um den Schritt gemäß einem der Ansprüche 1 bis 3 auszuführen.

6. Edge-Computing-MEC-Systemserver mit Mehrfachzugriff, umfassend:
einen Prozessor, einen Speicher und einen Bus, wobei der Prozessor über den Bus mit dem Speicher verbunden ist, der Speicher zum Speichern eines Programmcodesatzes konfiguriert ist und der Prozessor zum Aufrufen des im Speicher gespeicherten Programmcodes konfiguriert ist, um den Schritt gemäß Anspruch 4 auszuführen.

7. Computerlesbares Speichermedium, wobei das computerlesbare Speichermedium Anweisungen speichert und wenn die Anweisungen auf einem Computer ausgeführt werden, das Verfahren gemäß einem der Ansprüche 1 bis 4 implementiert wird.

8. Computer-Programmprodukt, das Anweisungen beinhaltet, wobei, wenn die Anweisungen auf einem Computer oder einem Prozessor ausgeführt werden, es dem Computer oder der Prozessor ermöglicht wird, das Verfahren gemäß einem der Ansprüche 1 bis 4 auszuführen.

## Revendications

1. Procédé de communication, dans lequel un serveur informatique de bord à accès multiple, MEC, communique avec un dispositif terminal (14, 24, 33) par l'intermédiaire d'un dispositif de réseau d'accès radio (12, 22, 32), dans lequel le serveur MEC est un second serveur MEC et le procédé de communication comprend :
les informations d'environnement du second serveur MEC sont détectées par un serveur de système MEC, et les informations d'environnement sont utilisées pour permettre au serveur de système MEC de déterminer si une charge du dispositif de réseau d'accès radio (12, 22, 32) connecté au second serveur MEC est supérieur à un premier seuil ;
si la charge du dispositif de réseau d'accès radio (12, 22, 32) connecté au second serveur MEC est supérieure à un premier seuil, le second serveur MEC reçoit au moins une instance d'application sélectionnée par le serveur de système MEC, dans lequel l'au moins une instance d'application a une fréquence d'accès supérieure à un troisième seuil ;
la réception, par le second serveur informatique de bord à accès multiple, MEC, d'une demande de service provenant d'un dispositif terminal (14, 24, 33), dans lequel la demande de service correspond à une première instance d'application ;
la recherche, par le second serveur MEC, de la première instance d'application à partir d'instances d'application préstockées ; et
si la première instance d'application est trouvée, l'appel, par le second serveur MEC, à la première instance d'application de fournir un service d'application pour le dispositif terminal (14, 24, 33) ;
si la première instance d'application n'est pas trouvée, l'envoi, par le second serveur MEC, d'une demande d'obtention à un serveur de système MEC, dans lequel le serveur de système MEC est configuré pour gérer au moins deux serveurs MEC, et le second serveur MEC appartient aux au moins deux serveurs MEC ; et
la réception, par le second serveur MEC, de la première instance d'application du serveur de système MEC ;
dans lequel la première application est une instance d'application fournie au système MEC par le second serveur MEC.

2. Procédé selon la revendication 1, dans lequel le dispositif terminal (14, 24, 33) comprend un dispositif Internet des véhicules.

3. Procédé selon l'une quelconque des revendications 1 ou 2, dans lequel l'instance d'application comprend une application de diagnostic automobile, une application de mise à niveau intelligente du cockpit, une application de contrôle de santé de l'unité principale, une application locale et une application d'achat de pack de fonctionnalités logicielles.

4. Procédé de communication, dans lequel le procédé de communication comprend :
l'établissement, au moyen d'un serveur de système informatique de bord à accès multiple, MEC, d'une connexion à un second serveur MEC ;
la détection d'informations d'environnement du second serveur MEC et le fait de déterminer si une charge d'un dispositif de réseau d'accès radio (12, 22, 32) connecté au second serveur MEC est supérieure à un premier seuil ;
si la charge du dispositif de réseau d'accès radio (12, 22, 32) connecté au second serveur MEC est supérieure à un premier seuil, le serveur de système MEC envoie au moins une instance d'application au second serveur MEC, dans lequel l'au moins une instance d'application a une fréquence d'accès supérieure à un troisième seuil ;
la réception, par le serveur de système MEC, d'une demande d'obtention provenant du second serveur MEC, dans lequel la demande d'obtention indique une première instance d'application ;
l'obtention, par le serveur de système MEC, de la première instance d'application auprès du premier serveur MEC en réponse à la demande d'obtention ; et
l'envoi, par le serveur de système MEC, de la première instance d'application au second serveur MEC.

5. Serveur informatique de bord à accès multiple, MEC, comprenant :
un processeur, une mémoire et un bus, dans lequel le processeur est connecté à la mémoire à l'aide du bus, la mémoire est configurée pour stocker un ensemble de codes de programme, et le processeur est configuré pour appeler le code de programme stocké dans la mémoire à exécuter l'étape selon l'une quelconque des revendications 1 à 3.

6. Serveur de système informatique de bord à accès multiple, MEC, comprenant :
un processeur, une mémoire et un bus, dans lequel le processeur est connecté à la mémoire à l'aide du bus, la mémoire est configurée pour stocker un ensemble de codes de programme, et le processeur est configuré pour invoquer le code de programme stocké dans la mémoire, pour exécuter l'étape selon la revendication 4.

7. Support de stockage lisible par ordinateur, dans lequel le support de stockage lisible par ordinateur stocke des instructions, et lorsque les instructions sont exécutées sur un ordinateur, le procédé selon l'une quelconque des revendications 1 à 4 est mis en oeuvre.

8. Produit programme informatique comportant des instructions, dans lequel, lorsque les instructions sont exécutées sur un ordinateur ou un processeur, l'ordinateur ou le processeur est autorisé à exécuter le procédé selon l'une quelconque des revendications 1 à 4.
